# EUROPEAN PATENT APPLICATION

(11) **EP 1 832 207 A2**
(43) Date of publication of application: **12.09.2007**
(21) Application number: 07250736.1
(22) Date of filing: 21.02.2007
(51) Int. Cl.: A47F 10/04

(54) **A device for storing stacked shopping baskets**

(30) Priority: 08.03.2006 GB 0604668
(71) Applicant: GLASDON GROUP LIMITED, Blackpool, Lancashire FY4 4WA (GB)
(72) Inventor: Graham, Will, Lytham St. Annes, Lancashire FY8 1PS (GB)
(74) Representative: Every, David Aidan

(57) **Abstract**

A device for storing stacked shopping baskets comprises a stand with a base and an upright wall. The base is recessed so as to receive at least a first basket in the stack. An anchor element is connected to the upright and is movable therealong, according to height of the stack, as is releasably connectable to the basket stack so as to allow selective anchoring of the stack to the upright. The anchor allows the stand to be moved easily without risk of the stack toppling.

## Description

The present invention relates to a device for storing stacked shopping baskets.

It is known to provide, in retail stores, a static support for the stacking of empty shopping baskets. A customer will typically take a basket from the top of such a stack when entering the store and, in a self-service environment, proceed to place goods in the basket. At the cash desk where the customer pays for the goods the basket is emptied and placed in a stack near the desk.

At certain intervals during the day the used baskets near the desk are recirculated to the entry point of the store. It may also be desirable to move baskets to other convenient locations in the store. In recent times mobile supports have been provided to make the movement of the basket stacks easier.

A problem with moving the stacked baskets is that a high stack tends to be unstable and prone to tipping away from the support.

It is an object of the present invention to obviate or mitigate the aforesaid disadvantages.

According to the present invention there is provided a device for storing stacked shopping baskets, the device comprising a base designed to support at least a first basket in the stack, an upright and an anchor element connected to the upright and being movable relative thereto along its length, the anchor element being releasably connectable to the basket stack so as to allow selective anchoring of the stack to the upright.

The invention enables the device to be moved around its environment loaded with baskets without risk of the stack toppling over. The moveable nature of the anchor element allows any height of stack to be accommodated and anchored in a simple manner.

The anchor element may be slidable along the upright.

The upright may comprise a post to which a first end of the anchor element is connected. The connection to the upright may be permanent to ensure that the element is never mislaid.

The upright may further comprise a wall to which the post is secured. This wall may provide support to the stack of baskets when the device is transported.

The wall may have an opening across which the post extends along the length of the upright. The opening allows easy access to the anchor element from the front or rear of the upright.

One end of the anchor element may comprise a ring that is disposed on said post for translation therealong. The ring may be elastomeric to render it easier for the anchor element to be connected to the basket stack. Alternatively the ring may be connected to a flexible strap that is disposed to translate along the post. Sliding it along the bar may tension the strap.

The anchor element may comprise a hooked member for connection to a basket in the stack. The hooked member preferably has an end for connection to the ring.

The base may be recessed so as to receive at least the first basket in the stack.

The base may have wheels, rollers or the like so that the device is mobile. The base may also have a front and a rear from which the upright extends, a pair of feet at the front and a pair of wheels at the rear. It can therefore be tilted about the wheels to raise the feet from the ground and allow it to be wheeled into a desired position.

In order to make movement easier, the upright may have at least one handle at the top thereof.

The anchor element may be permanently connected to the upright or otherwise.

A specific embodiment of the present invention will now be described, by way of example only, with reference to the accompanying drawings in which:

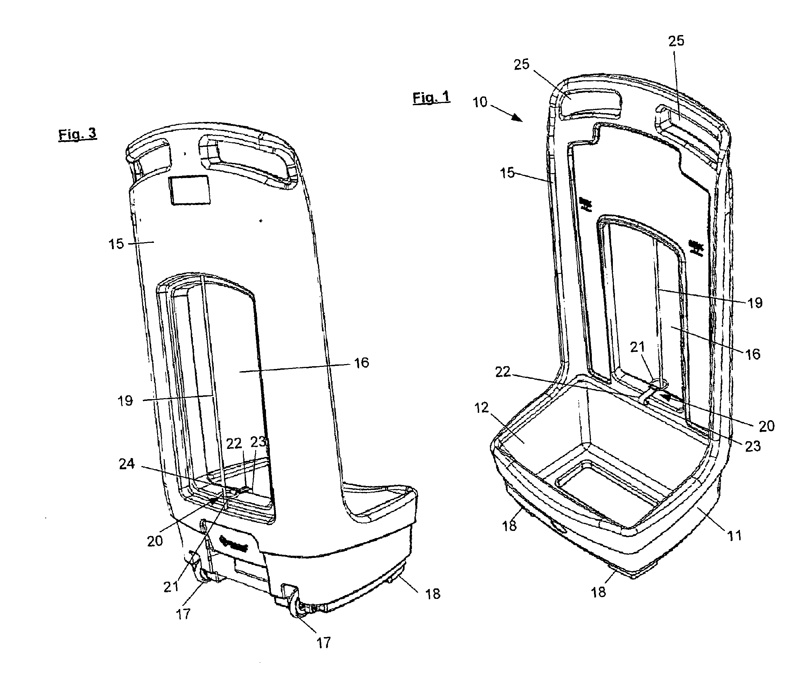

Figure 1 is a perspective view from above of the device for storing stacked baskets in accordance with the present invention;

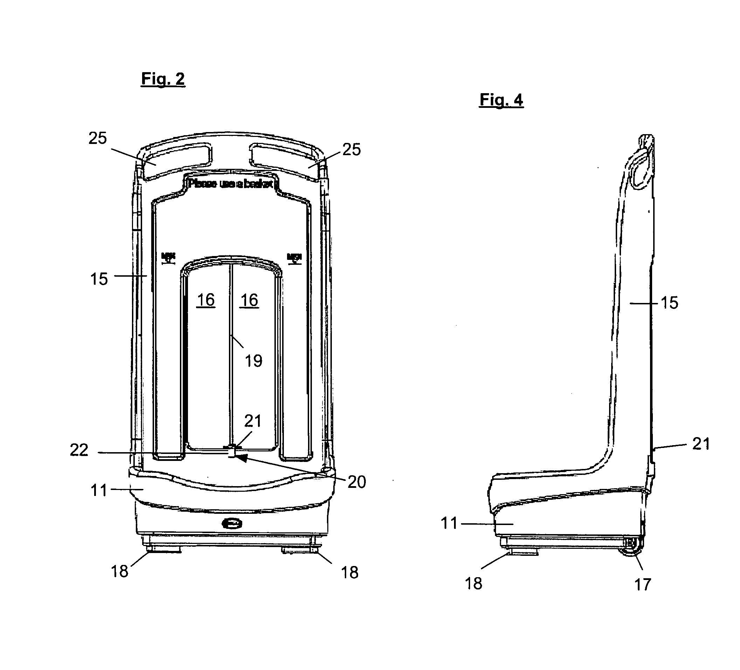

Figure 2 is a front view of the device of figure 1;
Figure 3 is a perspective view from the rear of the device of figure 1;
Figure 4 is a side view of the device of figure 1;
Figure 5 is a perspective front view of the device of figure 1 shown with a stack of baskets;
Figure 6 is a close-up fragmentary view from the rear of part of the device of figure 5;
Figure 7 is a front view of an alternative embodiment of an anchor member connected to a bar of the device;
Figure 8 is a fragmentary front view from inside a top basket in the stack showing the anchor member of figure 6 secured to the basket; and
Figure 9 is a fragmentary view from the rear showing the anchor member connected to the basket.

Referring now to the drawings, the exemplary device for storing stacked baskets is in the form of a stand 10 that is rotationally moulded from a plastics-based material. It will be understood that the stand may be formed by alternative means. The stand has a base 11 that is shaped to define a recess 12 that receives a first basket 13 in the stack 14 and an integral upright wall 15 with a central opening 16 that extends substantially vertically from the base.

The base 11 is designed to be floor mounted and has a pair of laterally spaced wheels 17 at the rear and a pair of spaced feet 18 at the front. The opening 16 in the upright wall 15 is bisected in a vertical direction by a metal bar 19 on which an anchor member 20 is slidably disposed.

The anchor member 20 is in two parts: an elastomeric ring 21 that encircles the bar 19 and a generally S-shaped member 22 formed from a rigid plastics material and having hooks 23, 24 at each end. A first hook 23 is designed to connect with part of the structure of the basket in the stack 14 and the second hook 24 is connected to the ring 21. The first hook 23 is relatively large and open to make the process of hooking the anchor member 20 to the basket stack 14 easy whereas the second hook 24 is designed to be crimped, or otherwise secured, to the ring 21 so that it does not ordinarily become separated in use.

The area of the upright wall 15 above the central opening 16 presents a smooth and generally flat area to which advertising or other information can be applied. At the very top of the upright wall 15 there are two openings 25 that allow the top edge of the wall to be grasped like a handle.

In use, the stand 10 is floor-mounted and stationary and empty baskets 26 are vertically stacked on the base 11 such that they nest with each other. When it is desirable to move the stack 14, the user tilts the stand 10 rearwardly about the rear wheels 17 so that the upright wall 15 is inclined to the vertical and the stand 10 can then be wheeled to a desired location where it is returned to the vertical orientation. In the tilted condition the baskets 26 are supported against the upright wall 15 of the stand 10. In order to prevent the stack 14 from toppling forwards away from the upright wall 15, particularly during the return of the stand to the vertical, the first hook 23 of the anchor member 20 is hooked over the uppermost basket 27 in the stack 14 before the stand is moved. This serves to anchor the stack 14 to the stand 10 during transportation.

The anchor member 20 is easily slidable up and down the bar 19 to accommodate the height of the stack 14 at the time of transportation. The short length of the anchor member 20 ensures that it does not become entrained between stacked baskets and is not a safety hazard by trailing on the floor and the elastomeric nature of the ring allows it to stretch a limited amount into the anchoring position. In use, the first hook 23 is hooked over the rear edge of the wire frame of the uppermost basket 27. However, if convenient, the hook 23 may be hooked to other baskets 26 in the stack although it will be appreciated that for taller stacks the nearer to the top it is hooked the more effective it will be in preventing toppling.

The opening 16 in the upright wall 15 provides easy access to the anchor member 20, from the rear if necessary. The upright wall 15 bears a maximum height level indicator (MAX) on its front surface to ensure that the stand is not over-filled to a point where the anchor member 20 cannot be used effectively.

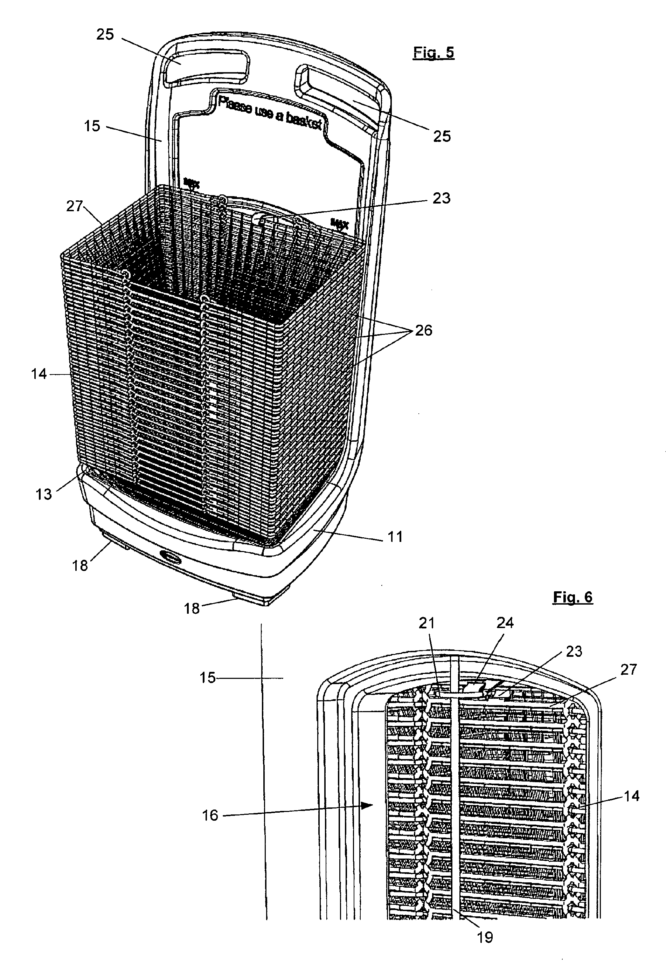

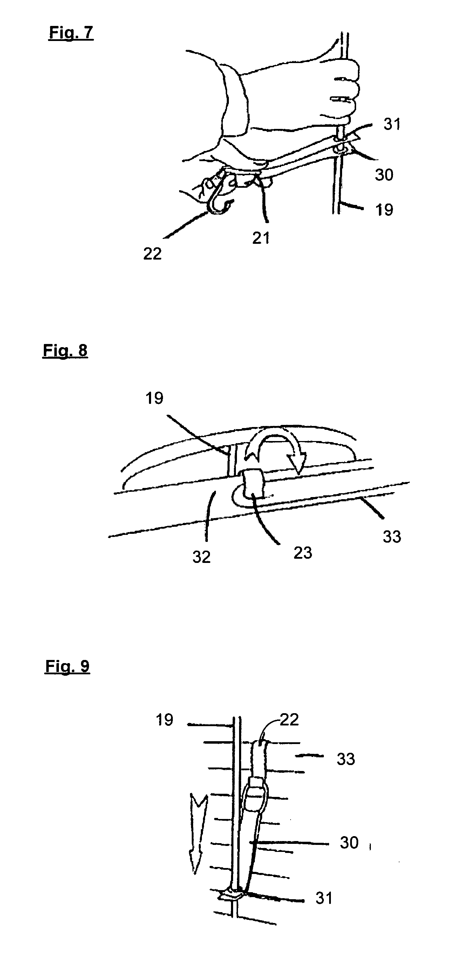

An alternative embodiment of the anchor member is shown in figures 7 to 9. As before, it comprises an S-shaped member 22 connected to an elastomeric ring 21 but differs from the embodiment of the foregoing figures by the fact that the ring 21 is connected to the bar 19 by a flexible extension strap 30. The strap is folded over so that its two ends meet and both ends have a hole lined with an eyelet 31. As can be seen from figure 7, the metal bar 19 is passed through the holes such that the strap can slide up and down. This version of the anchor member is designed for use with baskets that have solid walls rather than the wire basket shown in figures 5 and 6. As before the first hook 23 is hooked over the rear rim 32 of the top basket 33. In order that the baskets are held securely in place the strap is tensioned by sliding its ends downwards along the bar as shown by the arrow in figure 9.

It will be appreciated that numerous modifications to the above described design may be made without departing from the scope of the invention as defined in the appended claims. For example, the actual configuration of the anchor member can be of any convenient form provided it serves to secure the stack of baskets to the upright and is movable along the upright to accommodate different stack heights. Moreover, the metal bar may be replaced by any structure of a convenient form, such as a post or the like which may be integrally moulded into the upright wall of the stand or otherwise connected, provided that it allows the anchor to be moved relative to it so as to accommodate the stack height.

## Claims

1. A device for storing stacked shopping baskets, the device comprising a base designed to support at least a first basket in the stack, an upright and an anchor element connected to the upright and being movable relative thereto along its length, the anchor element being releasably connectable to the basket stack so as to allow selective anchoring of the stack to the upright.

2. A device according to claim 1, wherein the anchor element is slidable along the upright.

3. A device according to claim 1 or 2, wherein the upright comprises a post to which a first end of the anchor element is connected.

4. A device according to claim 3, wherein the upright further comprises a wall to which the post is secured.

5. A device according to claim 4, wherein the wall has an opening across which the post extends along the length of the upright.

6. A device according to claim 3, 4 or 5, wherein the first end of the anchor element comprises a ring that is disposed on said post for translation therealong.

7. A device according to claim 6, wherein the ring is elastomeric.

8. A device according to any preceding claim, wherein the anchor element comprises a hooked member for connection to a basket in the stack.

9. A device according to claim 8, when dependent from claim 6 or 7, wherein the hooked member has an end for connection to the ring.

10. A device according to any preceding claim, wherein the base is recessed.

11. A device according to any preceding claim, wherein the base has wheels, rollers or the like.

12. A device according to claim 11, wherein the base has a front and a rear from which the upright extends, a pair of feet at the front and a pair of wheels at the rear.

13. A device according to any preceding claim, wherein the upright has at least one handle at the top thereof.

14. A device according to any preceding claim, wherein the anchor element is permanently connected to the upright.
